# EUROPEAN PATENT APPLICATION

(11) **EP 0 887 222 A1**
(43) Date of publication of application: **30.12.1998**
(21) Application number: 98109943.5
(22) Date of filing: 30.05.1998
(51) Int. Cl.: B60L 11/12

(54) **Improvement in the driving motor system of a self-propelling vehicle**

(30) Priority: 24.06.1997 IT PN970036
(71) Applicant: Electrolux Euroclean Italia S.p.A., 20070 Guardamiglio, Lodi (IT)
(72) Inventor: Mainardi, Gino, 43039 Salsomaggiore, Parma (IT); Cremonesi, Angelo, 20076 Maleo, Lodi (IT); Gorra, Alberto, 20070 Fombio, Lodi (IT); Bassanini, Paolo, 20076 Maleo, Lodi (IT)
(74) Representative: Busca, Luciano

(57) **Abstract**

The vehicle has control means (4) and an electric motor (2) capable of being fed from a battery (3) for driving a driving wheel (1), and further comprises an internal-combustion engine (9) which is rotatably connected with a starter permanent-magnet motor (8) that is in turn adapted to be rotatably driven by said internal-combustion engine (9) at such a speed as to enable it to produce electric energy to supply said driving motor (2) and possibly also recharge the battery.
Advantage: The vehicle's construction is drastically simplified and the costs thereof are reduced accordingly.

## Description

The present invention refers to a self-propelling vehicle provided with a driving motor system of an improved type, such as for instance a motor sweeper, a self-propelling or automotive vehicle to wash and dry large surface areas, a self-propelled lawn mower, a special vehicle for the transportation of disabled people, or the like.

Self-propelling vehicles, such as for instance motor sweepers, are generally known to be provided with a driving motor system which, as duly associated to appropriate control means, may essentially be of any of the following four types:
a) system involving an internal-combustion engine, ie. comprising an endothermic diesel or explosion engine with an adequate horsepower rating, which is adapted to drive at least a driving wheel.
   These systems are very noisy, expensive and polluting, and cannot substantially be employed in internal or enclosed rooms;
b) system involving an electric motor, ie. comprising an electric motor capable of being fed by a rechargeable electric battery to drive at least a driving wheel.
   These systems have the drawback of a limited autonomy of operation and do not lend themselves to operation in external or outside ambients;
c) "elementary" hybrid system, ie. comprising the association of a system of the above cited type a) with a system of the above cited type b), wherein at least a driving wheel can be driven by the electric motor or the internal-combustion engine, alternatively through respective power-transmission means of different type.
   These systems enable the vehicle to be used in both internal and external ambients; however, they necessarily turn out to be undesirably oversized and bulky owing to the need for the vehicle to be provided with two mutually independent driving motor system of different type (with respective power transmission means) having substantially the same power rating. In particular, for it to be able to transmit a pre-determined driving power to the driving wheel, the whole hybrid driving motor system must be sized to an aggregate power rating that is equal to approximately the double value of the one which is required each time;
d) "advanced" hybrid system, ie. a system of substantially the above cited type c), in which a driving wheel is in all cases driven by an electric motor capable of being fed by a battery, while an appropriate electric generator driven by an endothermic motor is capable of supplying the energy required to operate the motor driving the drive wheel. The vehicle is able to operate even with its endothermic engine disconnected, ie. not operating; furthermore, the vehicle is able to operate without any need for its batteries to be charged through an external charging source.
   These systems enable the autonomy of operation of the vehicle to be considerably increased. On the other hand, even these advanced hybrid systems turn out to be undesirably complicated and expensive, due mainly to the need for an electric generator to be employed, as stated above, along with a starting motor for the endothermic engine and therewith associated automatic disconnecting means. In practice, therefore, such systems are largely applied in motor-cars, where the cost of such component parts have relatively little weight on the total cost of the vehicle; they however are still unsatisfactory in view of their application in vehicles having a relatively low overall cost, such as for instance in the case of motor-sweepers or similar equipment.

It therefore is a main purpose of the present invention to provide a self-propelling vehicle equipped with an improved type of driving motor system, in which all of the above cited drawbacks of prior-art solutions are substantially eliminated.

More precisely, it is a purpose of the present invention to provide a self-propelling vehicle of the above cited kind, which is particularly simple and unexpensive and, at the same time, is capable of enabling the vehicled to be used in a practical, convenient and versatile manner in both internal and external ambients, with an adequate autonomy of operation and without any need for the total power of the driving motor system to nbe overrated.

It is a further purpose of the present invention to provide a self-propelling vehicle of the above cited kind, which has a compact , low-consumption driving motor system that furthermore comprises a particularly small number of susbstantially simple and reliable component parts.

According to the invention, these aims are reached in a self-propelling vehicle equipped with an improved-type driving motor system having the characteristics as substantially recited in the appended claims.

The features and advantages of the present invention will anyway be more readily understood from the description of a preferred embodiment thereof which is given below by way of non-limiting example with reference to the accompanying drawings, in which:
- Figure 1 is a general schematical outline showing the principles of a preferred embodiment of the self-propelling vehicle according to the present invention;
- Figures 2 and 3 are views showing, in respective operating conditions, part of the control means for the combined actuation of some operational component parts of the vehicle's driving motor system, according to a preferred embodiment thereof.

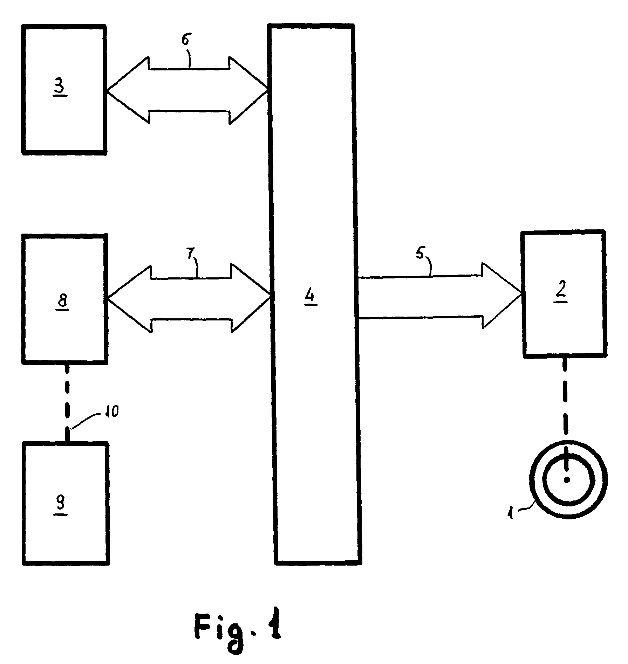

With reference to Figure 1, the vehicle (not shown for greater simplicity) comprises at least a driving wheel 1 that is adapted to be driven by an electric motor 2 which is capable of being fed by a rechargeable electric battery 3 through control means 4. The latter will be described in greater detail further on and preferably comprise a microprocessor, or similar means, for instance of the type Texas TMS370C742ANT.

Such control means 4 are mainly provided with a power-supply output 5 connected to the motor 2, as well as a bidirectional connection 6 with the battery 3 and a bidirectional connection 7 with an electric permanent-magnet motor 8. The latter, as this will be more clearly explained further on, may be of any type fitting to the purpose and may for example also comprise a dynamotor. In any case, the permanent-magnet motor 8 is rotatably connected with the shaft 10 of an endothermic engine 9, which may be either a diesel or a gasoline engine.

As this will be more clearly explained further on, the electric motor 8 is adapted to be selectively fed by the battery 3, through the contril means 4 and the connections 6, 7, to rotate at a first speed, which is lower than a given threshold, eg. approx. 1800 rpm, so as to start the endothermic engine 9.

According to a feature of the present invention, after having been so started the endothermic engine 9 brings in turn the permanent-magnet motor 8 to rotate, preferably in the same direction, at a second rotating speed which is higher than the above mentioned threshold.

As this has also been found experimentally, when the motor 8 starts rotating at a speed which is higher than said threshold speed, it tends to functionally convert into a generator, thereby producing electric energy adapted to supply the driving motor 2 via the connection 7, the control means 4 and the output 5.

By way of preferred example, the motor 8 can be assumed to be a simple permanent-magnet motor with a supply voltage rating of 24 V and a power rating of 750 W, capable of rotating at a speed of approx. 1600 to 1800 rpm. The endothermic engine 9 is adapted to rotate ad a steady-state speed of approx. 2800 to 2900 rpm while in this way driving the permanent-magnet motor 8, with an appropriate velocity ratio, at a speed of approx. 4000 rpm; under these conditions of operation, the motor 8 is therefore capable of generating a current of approx. 50 A.

According to a further feature of the present invention, the control means 4 are adapted to detect the charge condition of the battery 3 and are arranged so as to automatically cause the permanent-magnet motor 8 to start operating in the above described manner as soon as said charge is detected to decrease below a pre-determined value, so as to start the internal-combustion engine 9. The control means 4 are furthermore adapted to supply the electric energy so produced by the generator 8 to the driving motor 2 of the driving wheel 1 of the vehicle, in parallel with the power supply from the electric battery 3.

Said control means 4, via respective connections (not shown), are of course adapted to also supply power to appropriately provided auxiliary operative elements, such as for instance possible electric ignition means for the endothermic engine 9, or other auxiliary means, such as control and indicating means, possible rotating brushes (in the case of a vehicle for floor cleaning applications), etc.

In operation, said control means 4 are adapted to keep the endothermic engine 9 in a normally off state and to connect the battery 3 to the output 5, thereby to energize the driving motor 2 to drive the driving wheel 1 of the vehicle, which therefore behaves like a traditional electrically driven vehicle.

When the charge of the battery 3 decreases below the pre-determined threshold value (which may be adjustable), the control means 4 detect such a condition and use the residual charge of the same battery to start the permanent-magnet motor 8, which in turn starts the internal-combustion engine 9. Alter having been so started, the engine 9 starts itself driving the motor 8 as this has been described above. Under the circumstances, the motor 8 starts therefore behaving like a generator and supplies electric energy to the driving motor 2 via the connection 7, the control means 4 and the output 5.

As this has already been indicated above, the control means 4 are arranged so as to apply to the motor 2 the energy produced by the generator assembly 8, 9 in parallel with the power supplied by the battery 3. Following conditions may therefore occur:
A) When the energy produced by the generator assembly 8, 9 is in excess of the power input, ie. the electric power absorbed by the driving motor 2 (as this occurs when the vehicle moves along, ie. operates normally), the thereby produced excess energy is used to recharge the battery 3 which therefore does not need any external source to such a purpose. It will be appreciated that the control means 4 can be so arranged to also disconnect or switch off again the endothermic engine 9 as soon as the battery 3 turns out to have recharged to a sufficient extent, ie. beyond a given threshold value,
   The operating autonomy of the vehicle is therefore singificantly increased, although use is made of an electric battery 3 with a reduced power rating and a correspondingly reduced size, weight and cost. For the same reason, even the energy consumed to move the vehicle decreases correspondingly.
B) When less energy is produced by the generator assembly 8, 9 than required by the electric power input of the driving motor 2 (as this may for instance occur when the vehicle has to climb over a slope), the energy from the battery 3 adds to the one produced by the generator 8 to supply the necessary power to the driving motor 2. In practice, the battery 3 behaves in this case as a booster power supply. This again enables an endothermic engine 9 with a limited power rating (and, hence, limited size, weight and cost) to be used in the application.

Conclusively, in the self-propelling vehicle according to the present invention the internal-combustion engine 9 and the electric battery 3 are not simply associated in the motor system, but are rather mutually combined in an interactive manner through the control means 4 and the electric permanent-magnet motor 8, which can in different times act as a starting means for the endothermic engine 9 and a generator adapted to both supply power to the driving motor 2 and recharge the battery 3.

Under normal operating conditions, the battery 3 is furthermore the sole energy source to provide power to drive the vehicle, while under elevated power input conditions, ie. when the vehicle driving motor 2 absorbs more power than usual, it acts as a booster power supply by supplying the additional energy required.

Such a synergistic action of the main component parts of the motor system according to the present invention brings about a number of advantages, further to the already mentioned ones, ie.:
- the general structure of the motor system formed by the component parts 1 - 9 is considerably simplified, due in particular to the fact that the motor 8 performs a double duty and, therefore, makes it unnecessary for a specific electric generator to be used. Furthermore, the motor 8 can be advantageously connected rotatably with the endothermic engine 9 in a fixed manner, making in this way it unnecessary for a traditional automatic disconnecting device to be provided for a starter motor. Additionally, the bivalent or double-duty motor 8 may be of a particularly simple and unexpensive type. The resulting economic, size and reliablity advantages that in this way derive for the whole vehicle drive system can be readily appreciated;
- for a same aggregate power rating, the sizing of the battery 3 and the endothermic engine 9 can actually be reduced to a considerable extent. For example, the power rating of the battery and the endothermic engine can amount to approx. two thirds and one third, respectively, of the overall power rating of the motor system. This ensures a most versatile operation of the vehicle, as well as a long autonomy of operation thereof, without any need for the motor system to be oversized. As a result, the cost, the weight, the overall size and the energy consumption of the entire motor system are advantageously reduced;
- simplified are also the manufacturing and the structure of the vehicle, which is also particularly reliable.

It should also be noticed that, in principle, the use of a simple permanent-magnet motor 8 (instead of a dynamotor, for instance) to perform the above described bivalent duty might give rise to a technical problem, since the motor itself can become unstable at speeds that are substantially in excess of said threshold of approx. 1800 rpm. This is mainly due to the fact that , when the motor 8 is connected in parallel with the battery 3 and operates as a generator, the same motor 8, in the case that the battery is surcharged, could be affected by a backflowing or "return" current tending to demagnetize the permanent magnets thereof, thereby making the motor 8 practically useless.

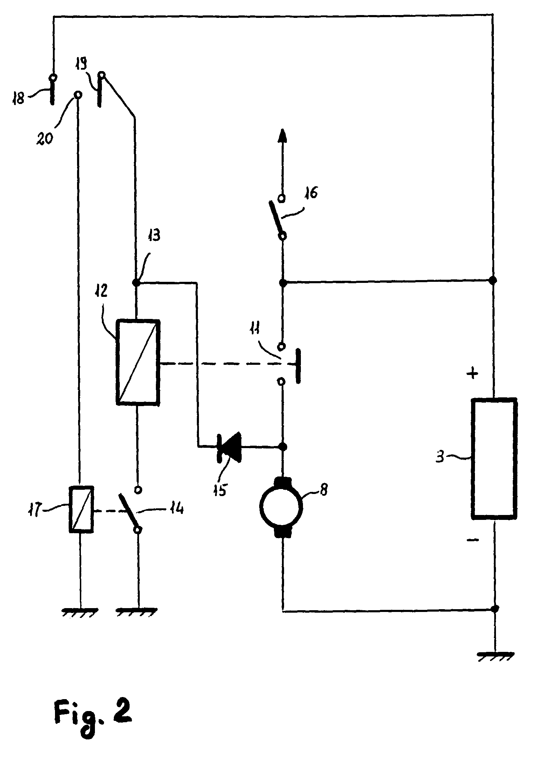

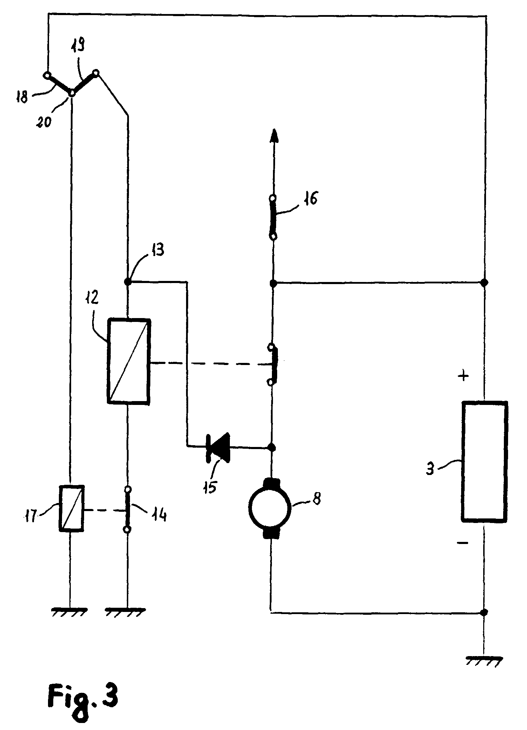

Such a problem can anyway be overcome thanks to another feature of the present invention which is better explained below with reference to Figures 2 and 3 illustrating a preferred manner in which the permanent-magnet motor 8 is controlled and connected to the battery 3 via the control means 4.

In particular, the motor 8 is connected to the terminals of the battery 3 via a normally open electromagnetic switch 11 controlled by a coil 12. The negative pole of the battery 3 is connected to ground, whereas the positive pole shall be intended as being connected to the driving motor 2 via a main on-off switch 16. A n intermediate point between the motor 8 and the electromagnetic switch 11 is connected to a terminal 13 of the coil 12 via a self-excited diode 15. The opposite terminal of the coil 12 is connected to ground via the normally open switch 14 of a relay 17. The latter has a terminal connected to ground and the opposite terminal connected to a terminal 20 that is associated to two moving contacts 18, 19 (normally open, as shown in Figure 2) which shall be intended as being driven by the microprocessor of the control means 4. The moving contact 18 is connected to the positive pole of the battery 3, whereas the moving contact 19 is connected to the terminal 13 of the coil 12.

In Figure 2, the above described circuit is illustrated as it is in a resting condition; in particular, the electric motor 2 is not operating (the same applies also to the endothermic engine 9, which is not shown in Figures 2 and 3) and the vehicle is not moving.

To start the vehicle for electrically driven operation, all it takes is to simply close the switch 16.

When the control means 4 intervene in the afore described conditions to start the endothermic engine 9, the moving contacts 18 and 19 are closed onto the terminal 20, preferably in sequence, as shown in Figure 3. In particular, the contact 19 is closed onto the terminal 20 only temporarily, in a per sè known manner. As a result, the relay 17 is energized by the battery 3 and causes the switch 14 to close; therefore, when also the switch 19 closes temporarily, the voltage of the battery 3 energizes also the coil 12 which causes the electromagnetic switch 11 to close.

At this point, also the permanent-magnet motor 8 is fed by the battery and, as described above, starts the endothermic engine which in turn rotatably drives the same motor 8 thereby cuasing it to perform as a generator It should be noticed that the self-excited diode 15 keeps ensuring power supply to the coil 12 which in turn keeps the electromagnetic switch 11 closed.

In these operating phases. therefore, the current circulating in the motor 8 can flow not only throughthe electromagnetic switch 11 and the battery 3, but also in the circuit formed by self-excited diode 15, coil 12, switch 14 of the relay, ground, motor 8.

As a result, even when the battery 3 is excessively charged and the motor-generator 8 rotates at speeds that might bring about instability conditions, the coil 12 (with the diode 15) is able to limit the current and stabilize the voltage affecting the same motor-generator.

On the other hand, to stop the operation of the vehicle motor system and the movement of the same vehicle, all it actually taxes is to open the switches 18 and 16, respectively, thereby restoring the conditions shown in Figure 2.

It will be appreciated that the afore described self-propelling vehicle can be the subject of a number of modifications without departing from the scope of the present invention.

For example, the permanent-magnet motor 8 can be constituted by a dynamotor, as already ponted put earlier in this description. In this case, the greater complexity and, of course, the higher cost of such a motor 8 will be partially offset by the possibility for the limiting and stabilizing circuit shown in Figures 2 and 3 to be omitted.

Furthermore, anyone skilled in the art will readily appreciate that the vehicle can actually be provided with contacts that, although similar to the afore described contacts 18, 19, are capable of being actuated manually. This may prove useful mainly if the driving motor 2 is to be operated solely with the endothermic engine 9, in which case the battery 3 will of course be cut out in a per sè known manner (not shown here).

## Claims

1. Self-propelling vehicle comprising an electric motor (2) adapted to be fed from an electric battery (3) via control means (4) to drive at least a driving wheel (1) of the vehicle, and further comprising an internal-combustion engine (9) associated to an electric starter apparatus adapted to be actuated through said control means to start the internal-combustion engine which in turn operates an electric generator, **characterized in that** said starter apparatus comprises at least an electric permanent-magnet motor (8) rotatably connected with the internal-combustion engine (9) which, when it is started, is in turn capable of rotatably driving the same permanent-magnet motor (8) at such a speed as to cause said permanent-magnet motor to produce electric energy adapted to feed the motor (2) driving said driving wheel (1) of the vehicle, said permanent-magnet motor (8) therefore alternately constituting said starter apparatus and said generator.

2. Self-propelling vehicle according to claim 1, **characterized in that**, to start the internal-combustion engine (9), said permanent-magnet motor (8) is capable of being operated at a rotation speed that is lower than a pre-determined threshold value, whereas the internal-combustion engine is adapted to drive the permanent-magnet motor at a rotation speed which is higher than said threshold value, above which said permanent-magnet motor (8) is adapted to produce said electric energy.

3. Self-propelling vehicle according to claim 1, **characterized in that** said control means (4) are adapted to detect the charge state of the battery (3) and are capable, when said charge decreases below a pre-determined value, of actuating the permanent-magnet motor (8) so as to start the internal-combustion engine (9), said control means being further adapted to apply to the battery said electric energy so produced by the generator, thereby recharging the same battery.

4. Self-propelling vehicle according to claim 1, **characterized in that** said control means (4) are adapted to detect the charge state of the battery (3) and are capable, when said charge decreases below a pre-determined value, of actuating the permanent-magnet motor (8) so as to start the internal-combustion engine (9), said control means being further adapted to apply to the driving motor (2) of the driving wheel (1), in parallel with the power supplied by the electric battery (3), which operates as a booster power supply, said electric energy so produced by the generator.

5. Self-propelling vehicle according to claim 2, **characterized in that** said control means (4) are adapted to operate the permanent-magnet motor (8), so as to start the internal-combustion engine (9), by connecting across it an electric circuit (11-15) which is in turn adapted not only to connect said motor (8) to the battery, but also to limit the current and to stabilize the voltage of the permanent-magnet motor (8) when the latter operates as a generator.

6. Self-propelling vehicle according to claim 5, **characterized in that** said electric circuit (12-15) is of the self-excited type and is capable of keeping closed a controlled switch (11) that is arranged between the permanent-magnet motor (8) and the battery (3).
